# EUROPÄISCHE PATENTSCHRIFT

(11) **EP 3 455 693 B1**
(45) Veröffentlichungstag und Bekanntmachung des Hinweises auf die Patenterteilung: **29.04.2020**
(21) Anmeldenummer: 17728452.8
(22) Anmeldetag: 10.05.2017
(51) Int. Cl.: H01H 37/04, H02G 15/007, G05D 23/275, H01H 9/04, H02G 15/013, B21C 23/14, B21C 35/02, G01D 11/24

(54) **VORRICHTUNG ZUR TEMPERATURREGELUNG**
TEMPERATURE CONTROL DEVICE
DISPOSITIF DE RÉGULATION DE TEMPÉRATURE

(30) Priorität: 12.05.2016 DE 102016108840
(43) Veröffentlichungstag der Anmeldung: 20.03.2019
(60) Teilanmeldung: 19186726.6
(73) Patentinhaber: STEGO-Holding GmbH, 74523 Schwäbisch Hall (DE)
(72) Erfinder: GUILLIARD, Dietmar, 74535 Mainhardt-Gailsbach (DE); DENT, Robert, 74523 Schwäbisch Hall (DE); MANGOLD, Elmar, 73485 Zöbingen, Unterschneidheim (DE)
(74) Vertreter: Kilchert, Jochen
(86) Internationale Anmeldenummer: PCT/EP2017/061182
(87) Internationale Veröffentlichungsnummer: WO 2017/194606

(56) Entgegenhaltungen:
- EP-A1- 2 650 898
- WO-A1-03/002865
- WO-A1-2008/028629
- DE-A1- 2 359 274
- DE-A1-102010 032 022
- DE-A1-102013 223 216
- DE-U1-202015 007 851
- US-A- 4 479 107
- US-A- 5 810 618
- US-A1- 2008 299 820
- US-A1- 2013 328 659
- US-A1- 2015 346 045

## Beschreibung

Die Erfindung bezieht sich auf eine Vorrichtung zur Temperaturregelung in explosionsgefährdeten Bereichen mit den Merkmalen des Oberbegriffs des Anspruchs 1. Die Erfindung bezieht sich ferner auf die Verwendung der Vorrichtung.

Bei der Temperaturregelung von Heizgeräten in explosionsgefährdeten Bereichen sind besondere Anforderungen zu beachten. Die hierfür eingesetzten Regler bzw. Thermostate müssen entsprechend geschützt bzw. ausgelegt sein, um zu verhindern, dass es durch einen Kontaktfunken beim Schalten unter Last oder durch eine elektrostatische Entladung zur Explosion kommt. Die ATEX-Richtlinie der Europäischen Union legt die Anforderungen an die jeweiligen Geräte und Systeme fest, die in explosionsgefährdeten Bereichen verwendet werden dürfen.

Bei den hierfür zugelassenen Reglern oder Heizgeräten, sogenannten EX-Reglern oder EX-Heizungen ist es beispielsweise erforderlich, dass das Außengehäuse einen Erdungsanschluss zur Verhinderung einer elektrostatischen Aufladung des Gehäuses aufweist. Die im Gehäuse angeordneten elektrischen Komponenten benötigen einen zusätzlichen Masseanschluss. Bei den üblicherweise auf dem Markt erhältlichen Vorrichtungen zur Temperaturreglung in explosionsgefährdeten Bereichen mit den Merkmalen des Oberbegriffs des Anspruchs 1 ist der im Gehäuse angeordnete Temperaturregler durch eine Masseverbindung im Gehäuse geschützt. Dadurch wird allerdings die Herstellung und Montage der Vorrichtung erschwert. Außerdem ist die Schaltgenauigkeit einer solchen bekannten Vorrichtung unbefriedigend, gerade wenn Regler mit hoher Schaltleistung eingesetzt werden, die eine direkte Steuerung der an den Regler angeschlossenen Heizgeräte ermöglicht.

Wird der Temperaturregler mit hohen Strömen beaufschlagt, erwärmt sich dieser aufgrund des physikalisch gegebenen Innenwiderstandes. Die sich hieraus ergebende Drift des Schaltpunktes bzw. das Hysterese-Verhalten des Reglers ist nachteilig.

Hinzu kommt, dass elektrische Geräte, die in explosionsgefährdeten Bereichen verwendet werden, hermetisch abgedichtet sein müssen, um den Eintritt exklusiver Gemische in das Gerät zu verhindern.

Die Dokumente DE 23 59 274 und EP 2 650 898 A1 offenbaren einen relevanten Stand der Technik.

Der Erfindung liegt die Aufgabe zu Grunde, bei einer Vorrichtung zur Temperaturregelung in explosionsgefährdeten Bereichen der eingangs genannten Art auf einfache Weise die Regelgenauigkeit zu verbessern.

Erfindungsgemäß wird die Aufgabe durch den Gegenstand des Anspruchs 1 gelöst.

Die Erfindung beruht auf dem Gedanken, eine Vorrichtung zur Temperaturregelung in explosionsgefährdeten Bereichen anzugeben, die einen Temperaturregler und ein Gehäuse aufweist, in dem der Temperaturregler angeordnet ist.

Das Gehäuse weist eine abgedichtete Öffnung auf, durch die elektrische Leitungen des Temperaturreglers geführt sind. Der Temperaturregler weist eine Messoberfläche auf, die zumindest bereichsweise direkt an einer Innenwand des Gehäuses anliegt und mit einer Erdungsfahne elektrisch verbunden ist. Die Erdungsfahne ist mit einer weiteren Leitung elektrisch verbunden, die durch die Öffnung geführt ist und vorzugsweise eine Einheit bildet.

Die Erfindung hat den Vorteil, dass durch die direkte Anlage der Messoberfläche an der Innenwand des Gehäuses ein optimaler Wärmeübergang vom Temperaturregler zur Umgebung und umgekehrt möglich ist. Mit anderen Worten wird der bidirektionale Wärmeübergang zwischen dem Temperaturregler und der Umgebung signifikant verbessert.

Dies hat für verschiedene Einsatzmöglichkeiten der erfindungsgemäßen Vorrichtung Vorteile.

Bei einer Beaufschlagung des Temperaturreglers mit hohen Strömen ist es wünschenswert, die dadurch entstehende Wärme möglichst schnell und wirksam abzuführen. Durch die direkte Anlage des Temperaturreglers bzw. dessen Messoberfläche an der Innenwand des Gehäuses wird die Bildung einer isolierenden Luftschicht zwischen dem Gehäuse und dem Temperaturregler vermieden und die Kühlung des Temperaturreglers verbessert. Damit wird die Mess- und damit die Regelgenauigkeit bzw. die Stabilität der Schaltpunkte erhöht.

Durch den direkten Temperaturaustausch mit der Umgebung stellt sich ein Temperaturgleichgewicht ein, welches den Regler in seiner Genauigkeit unterstützt. In diesem Fall bietet es sich an, die erfindungsgemäße Vorrichtung als Raumregler einzusetzen, weil dann die Außenseite des Gehäuses im Bereich der Messoberfläche frei zugänglich ist, so dass eine gute Kühlung des Gehäuses und damit des direkt an der Innenwand des Gehäuses befindlichen Temperaturreglers möglich ist.

Die guten wärmeübertragenden Eigenschaften können auch in der anderen Richtung, d.h. bei einem Wärmegradienten, der zum Temperaturregler hin abfällt, gut verwendet werden, weil dann der Wärmestrom über die Gehäusewand zum Temperaturregler schnell und wirksam übertragen wird. In diesem Fall eignet sich die erfindungsgemäße Vorrichtung besonders gut als Kontaktfühler, bei dem die Gehäusewand im Bereich der Messoberfläche mit einem Bauteil verbunden ist bzw. dieses kontaktiert, dessen Temperatur gemessen werden soll.

Die mit der Messoberfläche elektrisch verbundene Erdungsfahne hat den Vorteil, dass die Masseverbindung nicht über das Gehäuse, sondern durch eine weitere Leitung erfolgen kann, die mit der Erdungsfahne elektrisch verbunden ist. Diese Weiterleitung wird zusammen mit den bereits bestehenden elektrischen Leitungen des Temperaturreglers zusammen durch die Öffnung im Gehäuse nach außen geführt. Dadurch wird die Herstellung der Vorrichtung erleichtert. Außerdem hat die Erdungsfahne den Vorteil, dass der Temperaturregler im Gehäuse gut platziert werden kann, so dass eine direkte Anlage der Messoberfläche an der Innenwand des Gehäuses ermöglicht wird.

Ein weiterer Vorteil der Erfindung besteht darin, dass die Erdungsfahne und der Temperaturregler, bzw. die Komponenten des Temperaturreglers, wie die Steuerung und die Messoberfläche (Sensorik), eine Einheit bilden, die bei der Montage zusammen handhabbar sind. Dies bietet eine signifikante Erleichterung gegenüber dem Stand der Technik, bei dem die Erdung des Reglers durch einen elektrischen Kontakt mit dem Gehäuse erfolgt.

Bevorzugte Ausführungsformen sind in den Unteransprüchen angegeben.

Die Erdungsfahne erstreckt sich entlang einer Seitenwand des Temperaturreglers und steht über dessen Stirnseite vor. Die kompakte und bauraumsparende Ausbildung des Temperaturreglers ist von Vorteil, da die Erdungsfahne eng an der Seitenwand des Temperaturreglers geführt werden kann bzw. direkt an der Seitenwand des Temperaturreglers anliegt. Die Erdungsfahne wird also in Richtung der Elektroanschlüsse des Temperaturreglers geführt, die mit den Leitungen verbunden sind. Der mit der Erdungsfahne eine Einheit bildende Regler ist daher besonders kompakt aufgebaut und einfach zu montieren. Die über die Stirnseite vorstehende Erdungsfahne ist für die Verbindung mit der weiteren elektrischen Leitung gut zugänglich.

Bei einer weiteren Ausführungsform ist das freie Ende der Erdungsfahne zum Temperaturregler hin abgewinkelt, wodurch die Verbindung mit der weiteren elektrischen Leitung weiter erleichtert wird.

Die Messoberfläche bildet vorzugsweise einen seitlichen Absatz, der mit der Erdungsfahne elektrisch verbunden ist. Auch dadurch wird die kompakte Form des Temperaturreglers verbessert, weil die Erdungsfahne wegen des Absatzes mit der Messoberfläche seitlich bündig abschließt.

Vorzugsweise weist die Vorrichtung eine Einrichtung zur Zugentlastung der Leitungen auf, die in der Öffnung angeordnet ist. Die Einrichtung zur Zugentlastung dient gleichzeitig zur Abdichtung der Öffnung.

Bei einer weiteren bevorzugten Ausführungsform ist der Temperaturregler rotationssymmetrisch ausgebildet. Besonders vorteilhaft ist es, wenn der Temperaturregler in der Form eines Knopfthermostats ausgebildet ist. Der rotationssymmetrische Temperaturregler trägt dazu bei, dass die Herstellung der Vorrichtung vereinfacht wird, weil der Aufnahmeraum im Gehäuse für den Temperaturregler durch eine einfache Sacklochbohrung hergestellt werden kann. Außerdem entfällt durch die Erdungsfahne die Verbindung der Masse mit dem Gehäuse, da diese direkt mit dem stromführenden Teil verbunden ist.

Der Temperaturregler kann mit der Innenwand des Gehäuses stoffschlüssig, bspw. durch eine Kontaktverbindung, wie etwa durch eine Wärmepaste verbunden sein. Zusätzlich oder alternativ kann ein wärmeleitblech zwischen der Messoberfläche und der Innenwand angeordnet sein. Dabei handelt es sich um eine besonders einfache Möglichkeit, den Temperaturregler mit der Innenwand des Gehäuses direkt zu verbinden.

Zusätzlich oder alternativ kann auf den Temperaturregler eine mechanische Vorspannung, bspw. durch eine Druckfeder, aufgebracht werden, die die Messoberfläche an die Innenwand andrückt.

Der Temperaturregler weist einen Bimetallschalter auf, der sich als besonders zuverlässig im Zusammenhang mit dem Regeln der Temperatur in explosionsgefährdeten Bereichen erwiesen hat.

Nach Anspruch 8 wird die erfindungsgemäße Vorrichtung als Kontaktregler oder als Raumregler verwendet. Wenn die Vorrichtung als Kontaktregler verwendet wird, kommen die guten Wärmeübertragungseigenschaften zur Messung der Temperatur des kontaktierten Bauteils zum Tragen. Die Verwendung der Vorrichtung als Raumregler bietet sich an, wenn die Vorrichtung zur Regelung eines Heizgerätes verwendet wird, konkret wenn die Vorrichtung mit hohen Strömen zur direkten Steuerung des Heizgerätes eingesetzt wird, weil dann die im Temperaturregler erzeugte Wärme gut nach außen abgeführt wird.

Es wird ferner ein Verfahren zur Herstellung von Gehäusen für elektronische Bauteile, insbesondere Temperaturregler vorgeschlagen, bei dem ein massiver Gehäuseblock stranggepresst wird, der eine Vorderseite und eine Rückseite mit einem Halteprofil zur Verbindung mit einer Hutschiene aufweist.

Der Gehäuseblock wird zur Bildung mehrerer Gehäuse quergeteilt. In die Gehäuse oder in den Gehäuseblock werden Aufnahmeräume für die elektronischen Bauteile eingebracht. Es ist also möglich, Aufnahmeräume vor dem Ablängen, das heißt, vor dem Teilen des zusammenhängenden, massiven Gehäuseblocks einzubringen. Alternativ können die Aufnahmeräume nach dem Teilen in die einzelnen Gehäuse eingebracht werden, wobei dann jeweils ein Aufnahmeraum in ein Gehäuse eingebracht wird.

Die so hergestellten Gehäuse sind besonders zur Verwendung mit der erfindungsgemäßen Vorrichtung zur Temperaturregelung in explosionsgefährdeten Bereichen geeignet, da derartige Gehäuse einteilig sind und somit eine optimale hermetische Abdichtung des im Gehäuse angeordneten Temperaturreglers ermöglichen. Es ist auch möglich, die hergestellten Gehäuse in anderen technischen Bereichen zu verwenden, bei denen es auf eine möglichst hermetische Abdichtung des Temperaturreglers bzw. allgemein des elektronischen Bauteils ankommt, wie bspw. in Umgebungen mit hoher Feuchtigkeit, wo hohe IP Schutzklassen gefordert sind.

Ein weiterer Vorteil des Verfahrens besteht darin, dass die Herstellungskosten signifikant verringert werden.

Vorzugsweise werden die Aufnahmeräume durch ein spanabhebendes Verfahren, insbesondere durch Bohren eingebracht.

Weiter vorzugsweise wird in eine Seite, insbesondere in die Unterseite des Gehäuseblockes eine Nut in Strangpressrichtung eingebracht, die eine Innenverzahnung für eine Halteschraube aufweist. Die Halteschraube kann mit einer Leitung für den Potenzialausgleich des Gehäuses verbunden werden, um eine elektrostatische Aufladung des Gehäuses zu vermeiden. Vorzugsweise wird in die Innenverzahnung der Nut beim Strangpressen ausgebildet. Es ist auch möglich, die Nut mit der Innenverzahnung anderweitig in das Gehäuse einzubringen, beispielsweise durch ein spanabhebendes Verfahren wie Fräsen.

Es wird ein Gehäuse für ein elektronisches Bauteil, insbesondere einen Temperaturregler, mit einer Vorderseite und eine Rückseite vorgeschlagen, die ein Halteprofil zur Verbindung mit einer Hutschiene aufweist. Das Gehäuse ist einteilig ausgebildet und weist einen Aufnahmeraum für das elektronische Bauteil auf. Einteilig bedeutet, dass die Gehäusewände kontinuierlich ineinander übergehen, also nicht aus Einzelteilen zusammengesetzt sind. Außerdem fehlen Öffnungen, bis auf die Öffnung für die Kabeldurchführung, die die Gehäusewände durchsetzen, wie dies im Stand der Technik häufig für Nietverbindungen der Fall ist.

Bei einer besonders bevorzugten Ausführung ist das Gehäuse aus einem leitfähigen Material, insbesondere aus Aluminium oder einer Aluminiumlegierung gebildet. Dadurch wird die Gefahr einer elektrostatischen Aufladung des Gehäuses vermindert. Außerdem werden durch die Verwendung von Aluminium oder einer Aluminiumlegierung die Wärmeübergangseigenschaften des Gehäuses verbessert, so dass die Wärmeübertragung auf den Temperaturregler im Falle eines Kontaktreglers verbessert wird.

Das Gehäuse weist vorzugsweise weitere Funktionalitäten wie beispielsweise in verschiedenen Richtungen orientierte Schraubbefestigungen, d.h. seitliche und rückwärtige Schraubbefestigungen, einen DIN Clip sowie einen Erdungsanschluss auf. Die Vorderseite des Gehäuses kann mit einem optisch ansprechenden Design ausgebildet sein.

Vorzugsweise weist der Aufnahmeraum eine Öffnung auf, die eine Kabeldurchführung für das elektronische Bauteil bildet. Die Öffnung wird ferner zur Montage des elektronischen Bauteils, konkret des Temperaturreglers genutzt.

Die Bezeichnungen "Vorderseite, Rückseite, Unterseite und Oberseite" beziehen sich auf die Ausrichtung bzw. Position des Gehäuses im Einbauzustand. Dabei ist die Rückseite des Gehäuses mit einer Hutschiene verbunden.

Die Vorrichtung kann auch als Gerät oder Produkt bezeichnet werden.

Die Erfindung wird nachstehend anhand eines Ausführungsbeispiels unter Bezug auf die anbei gefügten schematischen Zeichnungen näher erläutert.

In diesen zeigen
- Fig. 1: eine perspektivische Ansicht einer Vorrichtung zur Temperaturregelung in explosionsgefährdeten Bereichen.

- Fig. 2: einen Schnitt durch die Vorrichtung nach Fig. 1;
- Fig. 3: eine perspektivische Darstellung des Temperaturreglers gemäß Fig. 1 mit angeschlossenen elektrischen Leitungen;
- Fig. 4: einen Schnitt durch das Gehäuse gemäß Fig. 1 ohne Einbauten;
- Fig. 5: eine Rückansicht der Vorrichtung nach Fig. 1 mit einer an der Vorrichtung befestigten Hutschiene und
- Fig. 6: eine Seitenansicht der Vorrichtung nach Fig. 1 mit einer an der Vorrichtung befestigten Hutschiene.

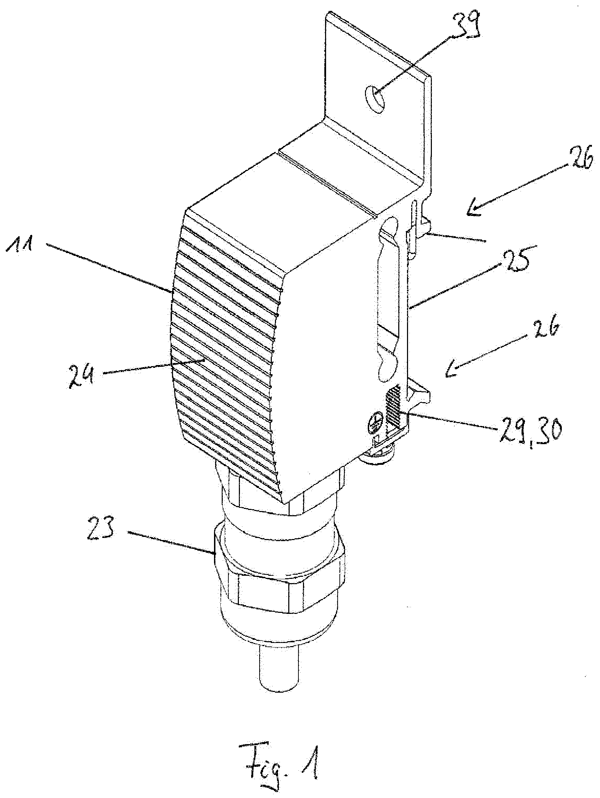

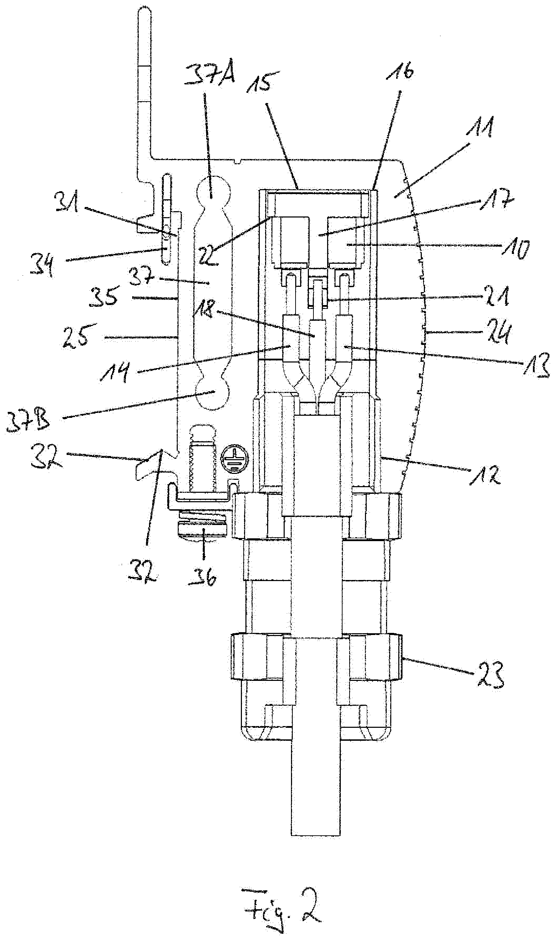

Die Vorrichtung zur Temperaturregelung, wie in den Fig. 1 und 2 dargestellt, ist für den Einsatz in explosionsgefährdeten Bereichen vorgesehen, bei denen eine Temperaturmessung beispielsweise in einer entzündbaren Gasatmosphäre oder in einer staubbelasteten Umgebung vorgenommen werden soll. Die Vorrichtung ist daher gegen Gase oder Staub abgedichtet.

Dazu weist die Vorrichtung einen Temperaturregler 10 auf, der in einem Gehäuse 11 angeordnet ist. Das Gehäuse 11 weist eine Öffnung 12 auf, durch die elektrische Leitungen 13, 14 des Temperaturreglers 10 nach außen geführt sind.

Die Öffnung 12 ist in an sich bekannter Weise so abgedichtet, dass Gase oder andere Stoffe nicht in das Gehäuse gelangen können. Die Abdichtung der Öffnung 12 erfolgt durch eine Einrichtung zur Zugentlastung 23, die in die Öffnung 12 eingeschraubt oder anderweitig mit dieser verbunden ist. Die Verbindung zwischen der Einrichtung zur Zugentlastung 23 und dem Gehäuse 11 ist ausreichend dicht, um in explosionsgefährdeten Bereichen eingesetzt zu werden. Insbesondere genügt die Verbindung gültigen ATEX Normen.

Das Gehäuse 11 weist eine Innenbohrung auf, die einen Hohlraum bzw. Aufnahmeraum 27 für den Temperaturregler 10 bildet. Der Temperaturregler 10 ist rotationssymmetrisch, insbesondere im Wesentlichen zylindrisch ausgebildet, so dass dieser in den Hohlraum passt. Allgemein gilt, dass die Form und Größe des Temperaturreglers 10 und die Form und Größe des Aufnahmeraumes 27 so aufeinander abgestimmt sind. Der Temperaturregler muss nicht zwingend rund sein. Eckige Temperaturregler sind ebenfalls möglich.

Für die Steuerung eines Gerätes, bspw. eines Heizgerätes durch den Temperaturregler ist dieser in an sich bekannter Weise mit elektrischen Leitungen 13, 14 verbunden, die durch die Öffnung 12 und die Einrichtung für die Zugentlastung 23 nach außen geführt sind. Die elektrischen Leitungen 13, 14 sind ummantelt. Konkret sind die elektrischen Leitungen 13, 14 mit entsprechenden Kontaktanschlüssen verbunden, die an einer ersten Stirnseite 20 des Temperaturreglers angeordnet sind.

Die elektrischen Leitungen 13, 14 sind mit einem (nicht dargestellten) Bimetallschalter verbunden, der im Inneren des Temperaturreglers 10 angeordnet ist und den Temperaturfühler des Temperaturreglers bildet. Wie in Fig. 2 gut zu sehen, weist der Temperaturregler 10 eine Messoberfläche 15 auf. Hinter der Messoberfläche 15 ist der Bimetallschalter im Inneren des Temperaturreglers angeordnet.

Durch die Messoberfläche 15 wird ein Wärmestrom im Betrieb des Temperaturreglers 10 in dessen Inneres, d.h. zum Bimetallschalter transportiert, der bei Überschreiten des Schaltpunktes schließt oder öffnet. Die Messoberfläche 15 ist an einer zweiten Stirnfläche des Temperaturreglers 10 ausgebildet. Wie in Fig. 2 gut zu erkennen, ist der Bereich der Messoberfläche 15, der die zweite Stirnfläche des Temperaturreglers 10 bildet, direkt mit einer Innenwand 16 des Gehäuses 11 verbunden und liegt an dieser an. Dadurch wird der Wärmeübergang vom Temperaturregler 10 auf das Gehäuse bzw. umgekehrt verbessert.

Unter direktem Kontakt wird einerseits eine direkte Anlage ohne Zwischenschichten verstanden, so dass die Messoberfläche 15 die Innenwand 16 direkt berührt. Andererseits wird auch eine Kombination der Messoberfläche 15 mit der Innenwand 16 durch Wärmeleitpaste und/oder Wärmeleitbleche als direkter Kontakt verstanden, weil es sich hierbei um eine stoffschlüssige Verbindung zwischen Messoberfläche 15 und Innenwand 16 handelt, die einen guten Wärmeübergang bewirkt.

Die Messoberfläche 15 ist nicht nur auf die Stirnseite des Temperaturreglers 10 begrenzt, sondern bildet einen Umfangsring, der konzentrisch zu einer Seitenwand 19 des Temperaturreglers angeordnet ist. Mit anderen Worten bildet die Messoberfläche 15 eine stirnseitige Kappe oder Haube, die die Wandung des Temperaturreglers 10 zumindest bereichsweise umgibt. Der ringförmige Abschnitt der Messoberfläche und der gerade, stirnseitige Abschnitt der Messoberfläche 15 sind einteilig miteinander verbunden.

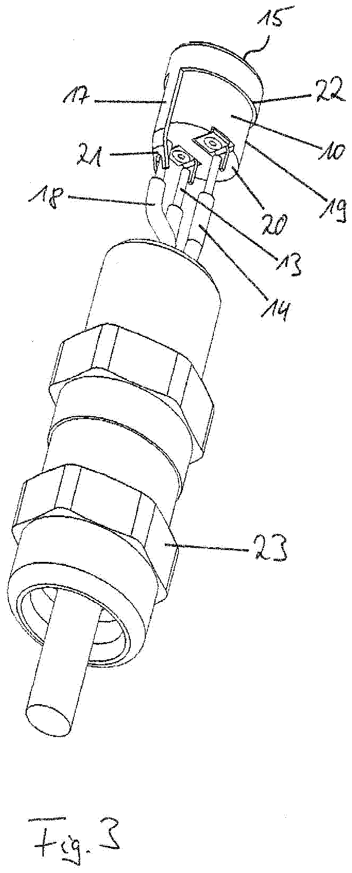

Die Vorrichtung weist, wie in den Fig. 2, 3 zu erkennen, eine Erdungsfahne 17 auf, die mit der Messoberfläche 15 elektrisch verbunden ist. Die Erdungsfahne 17 ist konkret mit dem ringförmigen Abschnitt der Messoberfläche 15 verbunden. Dies kann durch einen Löt-, Schweiß- oder Klebeverbindung oder einteilig hergestellt sein. Die Erdungsfahne 17 erstreckt sich, wie gut in Fig. 3 zu erkennen, parallel zur Seitenwand 19 des Temperaturreglers 10 und damit entlang der Seitenwand 19. Die Erdungsfahne 17 liegt an der Seitenwand 19 an und steht über die Stirnseite 20 des Temperaturreglers 10 vor. Das freie Ende 21 der Erdungsfahne 17 ist nach innen, d.h. zum Temperaturregler 10 hin abgewinkelt und bildet eine Gabel zur Aufnahme der weiteren elektrischen Leitung 18. Wie in Fig. 2, 3 weiter zu erkennen, bildet die Messoberfläche 15, konkret der ringförmige Abschnitt der Messoberfläche 15 einen Absatz 22, der in die Erdungsfahne 17 übergeht und somit mit dieser elektrisch verbunden ist. Es handelt sich dabei um eine direkte feste Verbindung mit den elektrisch führenden Kontakten.

Die vorstehend geschilderte Verbindung der Erdungsfahne 17 mit der Messoberfläche 15 ermöglicht den direkten Kontakt der Messoberfläche 15, konkret des stirnseitigen Abschnitts der Messoberfläche 16 mit der Innenwand 16 des Gehäuses 11. Hierzu wird der Temperaturregler 10 mit einem Anpressdruck beaufschlagt. Dieser wird im einfachsten Fall durch die Leitungen 13, 14, 18 erzeugt, die eine Überlänge zwischen der Einrichtung zur Zugentlastung 23 und der Stirnseite 20 des Temperaturreglers 10 aufweisen, so dass die Leitungen 13, 14, 18 den Temperaturregler 10 gegen die Innenwand 16 drücken. Alternativ oder zusätzlich kann eine Druckfeder eingesetzt werden. Weiterhin ist eine stoffschlüssige Verbindung zwischen dem Temperaturregler 10 und der Innenwand 16 des Gehäuses 11 durch eine Wärmeleitpaste oder ein Wärmeleitblech möglich.

Das Gehäuse 11 wird sowohl im Zusammenhang mit der Vorrichtung zur Temperaturregelung, also in Kombination mit dem im Gehäuse 11 angeordneten Temperaturregler 10 offenbart.

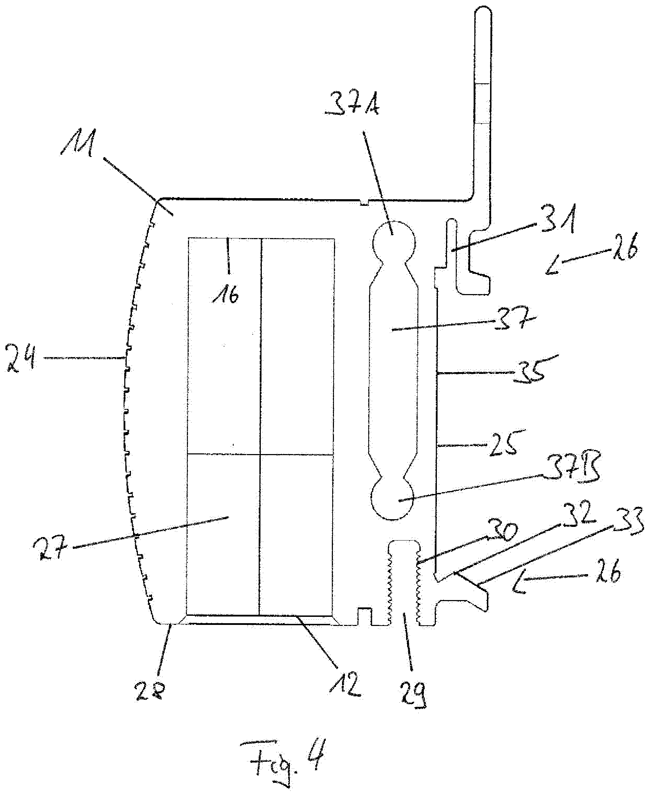

Außerdem wird das Gehäuse 11 als solches, d.h. ohne den im Gehäuse 11 angeordneten Temperaturregler 10 offenbart, da das Gehäuse 11 als solches auch für die Aufnahme anderer elektronischer Bauteile als Temperaturregler geeignet ist. Das Gehäuse 11 ist in Fig. 4 im Schnitt dargestellt. Das in Fig. 4 dargestellte Gehäuse 11 sowie die nachfolgenden Erläuterungen im Zusammenhang mit dem Gehäuse 11 werden auch im Zusammenhang mit der Vorrichtung zur Temperaturregelung in explosionsgefährdeten Bereichen offenbart. Es handelt sich bei den Figuren 1 bis 6 um ein- und dasselbe Gehäuse.

Das Gehäuse 11 ist aus einem leitfähigen Material, wodurch das Risiko einer elektrostatischen Aufladung des Gehäuses 11 begrenzt wird. Konkret ist das Gehäuse aus Aluminium oder einer Aluminiumlegierung hergestellt.

Wie im Schnitt gemäß Fig. 4 gut zu erkennen, ist das Gehäuse 11 einteilig. Dies bedeutet, dass das Gehäuse 11 nicht aus mehreren Einzelteilen zusammengefügt ist, sondern ein einziges monolithisches Bauteil mit durchgehenden Wänden bildet. Dies gilt nicht nur für die in Fig. 4 dargestellte Schnittebene, sondern für das gesamte Gehäuse 11.

Das Gehäuse 11 weist einen Aufnahmeraum 27 auf, in dem der Temperaturregler, wie beispielsweise in Fig. 2 dargestellt, oder ein anderes elektronisches Bauteil angeordnet werden kann. Der Aufnahmeraum 27 ist als zylindrische Sacklochbohrungen ausgeführt. Andere Ausführungen sind möglich.

Der Aufnahmeraum 27 weist eine Öffnung 12 auf, die an der Unterseite 28 des Gehäuses 11 ausgebildet ist. Die Öffnung 12 bildet einerseits den Zugang zum Aufnahmeraum für die Montage des Temperaturreglers 10. Andererseits wird nach der Montage des Temperaturreglers 10 die Einrichtung für die Zugentlastung 23 eingesetzt, insbesondere verschraubt, die die Öffnung 12 gegen die Umgebung abdichtet, so dass die Öffnung 12 eine Kabeldurchführung bildet.

Alternativ kann eine Vergussmasse zum Abdichten der Öffnung 12 verwendet werden.

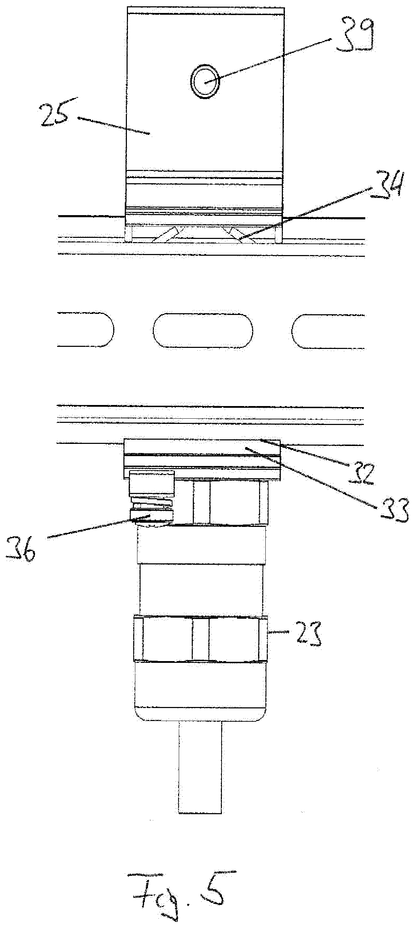

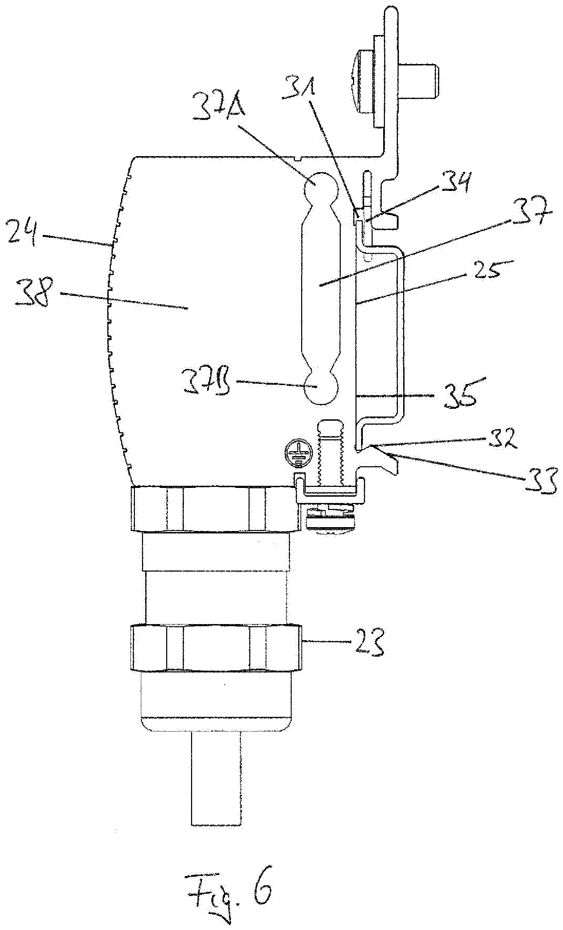

Das Halteprofil 26 dient dazu, das Gehäuse 11 mit einer Hutschiene zu verbinden, wie in den Figuren 5, 6 dargestellt. Dazu weist das Halteprofil 26, wie in den Figuren 1, 2 und 6 dargestellt, einen Aufnahmeschlitz 31 sowie eine parallel zum Aufnahmeschlitz 31 angeordnete Rastkante 32 auf. Der Aufnahmeschlitz 31 und die Rastkante 32 erstrecken sich im Wesentlichen parallel zur Unterseite 28 des Gehäuses 11. Die Rastkante 32 ist mit einer Einlaufschräge 33 verbunden, an der die Unterkante der Hutschiene beim Einclippen des Gehäuses 11 geführt wird. Dabei wird die Hutschiene über die Rastkante 32 geführt und rastet in den Spalt zwischen der Rastkante 32 und der Rückwand 35 des Gehäuses 11 ein, wie in den Figuren 5, 6 zu erkennen.

Im Aufnahmeschlitz 31 ist eine Halteklemme 34 bzw. Halteklammer oder Spannfeder oder Federbügel angeordnet, die einerseits am Boden des Aufnahmeschlitzes 31 und andererseits an der Hutschiene anliegt. Die Halteklemme 34 dient dazu, das Gehäuse 11 mit der Hutschiene zu verrasten, wenn die Hutschiene über die Rastkante 32 geführt wird. Beim Arretieren wird die Halteklemme 34 zusammengedrückt und erlaubt so das Überwinden der Rastkante 32. Wenn die Rastkante 32 im Spalt zwischen der Rückwand 35 und der Rastkante 32 angeordnet ist, übt die Halteklemme 34 eine Federkraft auf die Hutschiene aus, die das Gehäuse 11 sicher mit dieser fixiert.

An der Unterseite 28 des Gehäuses 11 ist eine Nut 29 ausgebildet, die eine Innenverzahnung 30 aufweist. Die Nut 29 erstreckt sich parallel zur Unterseite 28 über die gesamte Breite des Gehäuses 11. Die Nut 29 dient dazu, eine Halteschraube 36 aufzunehmen, wie in den Figuren 2 und 6 dargestellt. Die Halteschraube 36 dient dazu, das Gehäuse 11 mit einem Erdungskabel zu verbinden. Die Halteschraube 36 ist in der Nut 29 seitlich verschiebbar angeordnet.

Das Gehäuse weist im rückwärtigen Bereich Schrauböffnungen 37A, 37B für eine seitliche Befestigung auf. Eine weitere Öffnung, insbesondere ein Bohrloch 39, ist an der Rückseite des Gehäuses für eine Standardschraubbefestigung ausgebildet.

Das Gehäuse 11 wird wie folgt hergestellt.

Die Grundform des Gehäuses 11 wird durch Strangpressen gebildet. Dabei wird ein massiver Gehäuseblock mit dem in Fig. 1 gezeigten Außenprofil hergestellt. Das Außenprofil umfasst das Halteprofil 26 an der Rückseite 25 des Gehäuses 11, eine gekrümmte Oberfläche an der Vorderseite 24 sowie die Nut 29 mit der Innenverzahnung. Der Hohlraum 37 an der Rückseite 25 des Gehäuses 11 wird ebenfalls beim Strangpressen gebildet.

In den massiven, strangförmigen Gehäuseblock werden an der Unterseite 28 die Aufnahmeräume 27 eingebracht, beispielsweise durch Bohren. Dann wird der Gehäuseblock abgelängt, d.h. quergeteilt. Daraus ergeben sich mehrere Gehäuse, von denen eines in den Figuren 1 bis 6 dargestellt ist.

Alle Kanten und Flächen des Gehäuses 11 erstrecken sich in Strangpressrichtung, also auch die Rastkante 32, die Einlaufschräge 33, der Aufnahmeschlitz 31 und die Nut 29. Lediglich die Seitenflächen 38 des Gehäuses 11, die beim querteilen entstehen und der Aufnahmeraum 27 sind in einer anderen Richtung orientiert, da diese nicht beim Strangpressen gebildet werden.

Die Aufnahmeräume 27 können vor dem Querteilen in den Gehäuseblock oder nach dem Querteilen jeweils einzeln in die Gehäuse eingebracht werden. Wie in Fig. 4 gezeigt, weist bei dem dargestellten Ausführungsbeispiel jedes Gehäuse einen einzigen Aufnahmeraum 27 auf.

### Bezugszeichen

- 10: Temperaturregler
- 11: Gehäuse
- 12: Öffnung
- 13, 14: Elektrische Leitungen
- 15: Messoberfläche
- 16: Innenwand
- 17: Erdungsfahne
- 18: Weitere Leitung
- 19: Seitenwand
- 20: Stirnseite
- 21: Freies Ende
- 22: Absatz
- 23: Einrichtung zur Zugentlastung
- 24: Vorderseite
- 25: Rückseite
- 26: Halteprofil
- 27: Aufnahmeräume
- 28: Unterseite
- 29: Nut
- 30: Innenverzahnung
- 31: Aufnahmeschlitz
- 32: Rastkante
- 33: Einlaufschräge
- 34: Halteklemme
- 35: Rückwand
- 36: Halteschraube
- 37: Hohlraum
- 37A, 37B: Seitliche Schraubbefestigung
- 38: Seitenflächen
- 39: Bohrloch für Standardschraubbefestigung

## Patentansprüche

1. Vorrichtung zur Temperaturregelung in explosionsgefährdeten Bereichen mit einem Temperaturregler (10) und einem Gehäuse (11), in dem der Temperaturregler (10) angeordnet ist, wobei das Gehäuse (11) eine abgedichtete Öffnung (12) aufweist, durch die die elektrischen Leitungen (13, 14) des Temperaturreglers (10) geführt sind,
wobei der Temperaturregler (10) eine Messoberfläche (15) aufweist, die zumindest bereichsweise direkt an einer Innenwand (16) des Gehäuses (11) anliegt und mit einer Erdungsfahne (17) elektrisch verbunden ist, wobei die Erdungsfahne (17) mit einer weiteren Leitung (18) elektrisch verbunden ist, die durch die Öffnung (12) geführt ist,
**dadurch gekennzeichnet, dass**
die Erdungsfahne (17) sich entlang einer Seitenwand (19) des Temperaturreglers (10) erstreckt und über dessen Stirnseite (20) vorsteht.

2. Vorrichtung nach Anspruch 1,
**dadurch gekennzeichnet, dass**
die Erdungsfahne (17) ein freies Ende (21) aufweist, das zum Temperaturregler (10) hin abgewinkelt ist.

3. Vorrichtung nach Anspruch 1 oder 2,
**dadurch gekennzeichnet, dass**
die Messoberfläche (15) einen seitlichen Absatz (22) bildet, der mit der Erdungsfahne (17) elektrisch verbunden ist.

4. Vorrichtung nach einem der vorhergehenden Ansprüche,
**dadurch gekennzeichnet, dass**
eine Einrichtung zur Zugentlastung (23) der Leitungen (13, 14, 18) in der Öffnung (12) angeordnet ist.

5. Vorrichtung nach einem der vorhergehenden Ansprüche,
**dadurch gekennzeichnet, dass**
der Temperaturregler (10) rotationssymmetrisch, insbesondere in der Form eines Knopfthermostats, ausgebildet ist.

6. Vorrichtung nach einem der vorhergehenden Ansprüche,
**dadurch gekennzeichnet, dass**
der Temperaturregler (10) mit der Innenwand (16) des Gehäuses (11) stoffschlüssig, insbesondere durch Kontaktverbindung, verbunden ist.

7. Vorrichtung nach einem der vorhergehenden Ansprüche,
**dadurch gekennzeichnet, dass**
der Temperaturregler (10) einen Bimetallschalter aufweist.

8. Verwendung der Vorrichtung nach Anspruch 1 als Kontaktregler oder als Raumregler.

## Claims

1. Apparatus for controlling the temperature in areas at risk of explosion, having a temperature controller (10) and a housing (11) in which the temperature controller (10) is arranged, wherein the housing (11) has a sealed opening (12) through which the electrical lines (13, 14) of the temperature controller (10) are guided, wherein the temperature controller (10) has a measurement surface (15) which rests directly against an inner wall (16) of the housing (11) at least in certain areas and is electrically connected to an earthing lug (17), wherein the earthing lug (17) is electrically connected to a further line (18) which is guided through the opening (12),
**characterized in that**
the earthing lug (17) extends along a side wall (19) of the temperature controller (10) and protrudes beyond the end face (20) of the latter.

2. Apparatus according to Claim 1,
**characterized in that**
the earthing lug (17) has a free end (21) which is angled towards the temperature controller (10).

3. Apparatus according to Claim 1 or 2,
**characterized in that**
the measurement surface (15) forms a lateral shoulder (22) which is electrically connected to the earthing lug (17).

4. Apparatus according to one of the preceding claims, **characterized in that**
a device for relieving the strain (23) on the lines (13, 14, 18) is arranged in the opening (12).

5. Apparatus according to one of the preceding claims,
**characterized in that**
the temperature controller (10) is rotationally symmetrical, in particular in the form of a button thermostat.

6. Apparatus according to one of the preceding claims,
**characterized in that**
the temperature controller (10) is connected to the inner wall (16) of the housing (11) with a material bond, in particular by means of a contact connection.

7. Apparatus according to one of the preceding claims,
**characterized in that**
the temperature controller (10) has a bimetal switch.

8. Use of the apparatus according to Claim 1 as a contact controller or as a room controller.

## Revendications

1. Arrangement de régulation de température dans des zones potentiellement explosibles, comprenant un régulateur de température (10) et un boîtier (11) dans lequel est disposé le régulateur de température (10), le boîtier (11) possédant une ouverture (12) rendue étanche à travers laquelle passent les câbles électriques (13, 14) du régulateur de température (10),
le régulateur de température (10) possédant une surface de mesure (15) qui repose au moins par certaines zones directement contre une paroi intérieure (16) du boîtier (11) et qui est reliée électriquement à une languette de mise à la terre (17), la languette de mise à la terre (17) étant reliée électriquement à un câble supplémentaire (18) qui passe à travers l'ouverture (12), **caractérisé en ce que**
la languette de mise à la terre (17) s'étend le long d'une paroi latérale (19) du régulateur de température (10) et fait saillie au-dessus de son côté frontal (20).

2. Arrangement selon la revendication 1, **caractérisé en ce que** la languette de mise à la terre (17) possède une extrémité libre (21) qui est coudée en direction du régulateur de température (10).

3. Arrangement selon la revendication 1 ou 2, **caractérisé en ce que** la surface de mesure (15) forme un talon latéral (22) qui est relié électriquement à la languette de mise à la terre (17).

4. Arrangement selon l'une des revendications précédentes, **caractérisé en ce qu'**un dispositif d'antitraction (23) des câbles (13, 14, 18) est disposé dans l'ouverture (12).

5. Arrangement selon l'une des revendications précédentes, **caractérisé en ce que** le régulateur de température (10) est de configuration symétrique en rotation, notamment est réalisé sous la forme d'un thermostat à bouton.

6. Arrangement selon l'une des revendications précédentes, **caractérisé en ce que** le régulateur de température (10) est relié par fusion de matières à la paroi intérieure (16) du boîtier (11), notamment par liaison de contact.

7. Arrangement selon l'une des revendications précédentes, **caractérisé en ce que** le régulateur de température (10) possède un commutateur à bilame.

8. Utilisation d'un arrangement selon la revendication 1 en tant que régulateur à contact ou régulateur d'espace.
